# EUROPEAN PATENT APPLICATION

(11) **EP 1 548 714 A2**
(43) Date of publication of application: **29.06.2005**
(21) Application number: 04027301.3
(22) Date of filing: 17.11.2004
(51) Int. Cl.: G11B 7/007, G11B 7/24, G11B 7/005, G11B 7/26

(54) **Optical disk, optical disk apparatus, optical disk recording and reproduction method, and apparatus and method for recording BCA code**

(30) Priority: 28.11.2003 JP 2003400117
(71) Applicant: Kabushiki Kaisha Toshiba, Tokyo 105-8001 (JP)
(72) Inventor: Ogawa, Akihito c/o Toshiba Corporation, Minato-ku Tokyo 105-8001 (JP); Nakamura, Naomasa c/o Toshiba Corporation, Minato-ku Tokyo 105-8001 (JP); Oomachi, Noritake c/o Toshiba Corporation, Minato-ku Tokyo 105-8001 (JP); Yusu, Keiichiro c/o Toshiba Corporation, Minato-ku Tokyo 105-8001 (JP)
(74) Representative: Henkel, Feiler & Hänzel

(57) **Abstract**

A disk (1) has a burst cutting area (BCA) (10) formed by a crystalline portion and an amorphous portion, and the disk (1) is an optical disk (L-H medium) in which the reflectance of the crystalline portion is lower than that of the amorphous portion. The width Wcry of the crystalline portion in the BCA (10) is lower than half the data period Wdat. Therefore, the average level of a BCA reproduction signal is unchanged regardless of whether the optical disk is an H-L medium or an L-H medium, so that focus control and reproduction of a BCA code can be performed even if a parameter of a circuit is a default.

## Description

The present invention relates to an information recording medium (optical disk) having a burst cutting area (BCA), an optical disk apparatus using the BCA, an optical disk recording and reproduction method, and an apparatus and method for recording a BCA code.

As is well known, recently an optical disk having a storage capacity of 4.7 GB in single-sided one-layer format has become commercially practical as an optical disk on which information can be recorded with high density. For example, the practically used optical disks include DVD-ROM (Digital Versatile Disk Read-Only Memory) which is of a read-only optical disk, a rewritable +RW (ECMA-330), a DVD-RAM (Random Access Memory) (ECMA-330), and a DVD-RW (Rewritable) (ECMA-338).

In these optical disks, an information recording layer is formed on a transparent substrate and the information is recorded and reproduced by focusing a laser beam on the information recording layer. An information recording surface of the optical disk is divided into some areas. The DVD-RAM and the like have a configuration including a BCA, a lead-in area, a data area, and a lead-out area in order from an inner radius of the optical disk. In the BCA, copy protection information specific to the optical disk and information indicating a type of the optical disk are stored in a form of the BCA code. Optical disk management information is recorded in the lead-in area, and information such as user's data can be recorded in the data area.

In the BCA, the BCA code is recorded by a barcode recording mark which is long along a circumferential direction of the disk. The barcode is formed by focusing a high-power laser beam such as a YAG laser beam on the information recording layer to scatter the information recording layer or the reflection film, or by utilizing phase change of the information recording medium as disclosed in Jpn. Pat. Appln. KOKAI Publication No. 2001-243636. The high-power laser beam can be used for any one of the read-only optical disk, the write-once optical disk, and the rewritable optical disk, and the phase change can be applied to the optical disks such as the write-once optical disk and the rewritable optical disk to form the BCA. Further, the high-power laser beam had an advantage that it can be used for the read-only optical disk in which the information recording layer is formed only by the reflection film. On the other hand, the phase change has a feature that the recording can be easily performed with the laser beam having relatively low output.

In the optical disk having the phase change recording medium such as DVD-RAM and DVD-RW, usually the entire surface of the disk is crystallized in an initial state, and an amorphous recording mark is formed by irradiating the crystalline surface with the laser beam having higher intensity in a pulse manner. At this point, the medium is melted by the laser beam having higher intensity, and then the medium is quenched by weakening the irradiation of the laser beam to form the amorphous state. In the reproduction of the information, the medium is irradiated with a laser beam having lower intensity, and the change in reflectance between the crystalline portion and the amorphous portion which is of the recording mark is converted into an electrical signal to perform readout of the information.

In the optical disks such as DVD-ROM, DVD-RAM, and DVD-RW which have become currently commercially practical, the high-power laser beam is used for the recording of BCA, and the PE-RZ (Phase Encoding-Return to Zero) modulated BCA code is recorded by scattering (removing) the information recording layer or the reflection film or imparting irreversible change such as chemical change. When the BCA code is reproduced with the optical disk apparatus, because the reflectance of the laser beam is decreased in a portion where the information recording layer or the reflection film is scattered ,a signal level is decreased. In contrast, the signal level is held in the higher state in other portions. The portion where the signal level is decreased is referred to as mark and the portion where the signal level is held at in the higher state is referred to as space. Generally in the BCA code, when a pulse width of the mark is equal to a pulse width of the space, demodulation is interrupted. Further, it is simple to form the portion where the information recording layer or the reflection film is removed as small as possible. Therefore, the BCA code is formed so that the width of the mark is smaller than that of the space.

In recording the BCA code by utilizing the phase change, on the other hand, the amorphous area and the crystalline area correspond to the mark and the space. For example, in the optical disk described in Jpn. Pat. Appln. KOKAI Publication No. 2001-243636, the BCA code is recorded by irradiating the amorphous area with the laser beam having relative low power to form the crystalline area. All the phase change recording medium such as DVD-RAM and DVD-RW which have become currently commercially practical are the medium referred to as High-to-Low medium (hereinafter referred to as an H-L medium), in which the reflectance in all the amorphous areas is lower than that in the crystalline area.

However, in the phase change medium, not only the medium in which the crystalline area is higher than the amorphous area in reflectance but also the medium in which the amorphous area is higher than the crystalline area in reflectance can be produced depending on a type of the medium or a layer structure. The medium in which the amorphous area is higher than the crystalline area in reflectance is referred to as a Low-to-High medium (hereinafter referred to as an L-H medium), the L-H medium has the feature such as high resistance against cross erase, and a possibility that the L-H medium becomes commercially practical is increased.

In the L-H medium, the pulse width of the mark in which the signal level is decreased is broader than the pulse width of the space when the BCA code is recorded in the similar manner described in Jpn. Pat. Appln. KOKAI Publication No. 2001-243636. Namely, polarity of the signal of the BCA code is reversed in the mark and the space when compared with the H-L medium, and an average level of the signals is different. This allows properties of the L-H medium to differ from those of the H-L medium. Accordingly, the optical disks in which signal polarities are opposite to each other and the average levels of the signals are remarkably different from each other are mixed.

When the optical disk having the signal polarity different from the H-L medium is reproduced with the conventional optical disk apparatus, there is a problem that compatibility of the optical disk is decreased, reading errors of the information are increased, or a long time is required for discrimination of the disk. When the optical disks whose average levels of the signals are remarkably different from each other are mixed, it is necessary to broaden a pulling enabling range of a focus servo circuit in order to focus the light beam onto the optical disk, which results in the problem that design of the optical disk apparatus becomes difficult or cost is increased.

In view of the foregoing, it is an object of the invention to provide an optical disk, an optical disk apparatus, an optical disk recording and reproduction method, a BCA code recording apparatus, and a BCA code recording method, in which compatibility is high with respect to a BCA code in which the recording is performed by utilizing a phase change of a medium, reading errors of information are few, and determination of the disk can rapidly be performed.

An optical disk according to an embodiment of the invention which has a burst cutting area (BCA) formed by a crystalline portion and an amorphous portion, the reflectance of the crystalline portion being lower than the reflectance of the amorphous portion, wherein the width of each crystalline portion in the BCA is smaller than half the width of one data period.

Average levels of BCA reproduction signals are substantially equalized in an H-L medium and an L-H medium by forming the width of each crystalline portion smaller than half a data period in the BCA of the L-H medium. Therefore, the focus control and BCA code reproduction can be performed by using the same circuit parameter value for both the H-L medium and the L-H medium.

In accordance with an optical disk apparatus and an optical disk recording and reproduction method of an embodiment of the invention, regardless of whether the optical disk is the H-L medium or the L-H medium, the medium polarity determination is correctly performed and a parameter of a circuit is optimized in a lead-in area and a data area on the basis of the determination. When the polarity of the medium is changed, the reflectance of the optical disk and the like are largely changed in the lead-in area and the data area except the BCA. The optimization can perform the stable servo control and the correct information readout for any optical disk.

In accordance with a BCA code recording apparatus and a BCA code recording method of the invention, it is determined from a quantity of reflected light whether the optical disk is an H-L medium or L-H medium, and the determined polarity information of the optical disk can correctly be recorded in the BCA.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a configuration of an information recording medium according to an embodiment of the invention;
FIG. 2 is a schematic view showing a BCA code recorded on a conventional DVD-ROM disk and a reproduction signal of a BCA code;
FIG. 3 is a schematic view showing recording data, a waveform of a laser beam to be recorded, a recorded BCA code, and a reproduction signal of the BCA code, when the phase change type BCA code is recorded on an H-L medium such as a DVD-RAM;
FIG. 4 is a schematic view showing the recorded BCA code and the reproduction signal of the BCA code, when the BCA code is recorded on an L-H medium in a manner similar to FIG. 3;
FIG. 5 is a schematic view showing a modulated waveform of the laser beam, the recorded BCA code, and the reproduction signal of the BCA code, when the correct BCA code is recorded on the L-H medium according to an embodiment of the invention;
FIG. 6 shows a structure of data to be stored in the BCA;
FIG. 7 shows contents to be stored in a BCA data field;
FIG. 8 is a block diagram showing an optical disk apparatus according to an embodiment of the invention;
FIG. 9 shows an example of a quadrant photodiode;
FIG. 10 is a block diagram showing a BCA signal processing circuit;
FIG. 11 is a flowchart showing a reproduction start process according to the invention;
FIG. 12 is a block diagram showing a BCA code recording apparatus for recording a BCA code according to the invention;
FIG. 13 shows examples of recording data, a modulated signal, and a recording pulse; and
FIG. 14 is a flowchart for explaining an example of a BCA code recording method according to the invention.

Referring now to the accompanying drawings, preferred embodiments of the invention will be described in detail.

### (Information Recording Medium of the Invention)

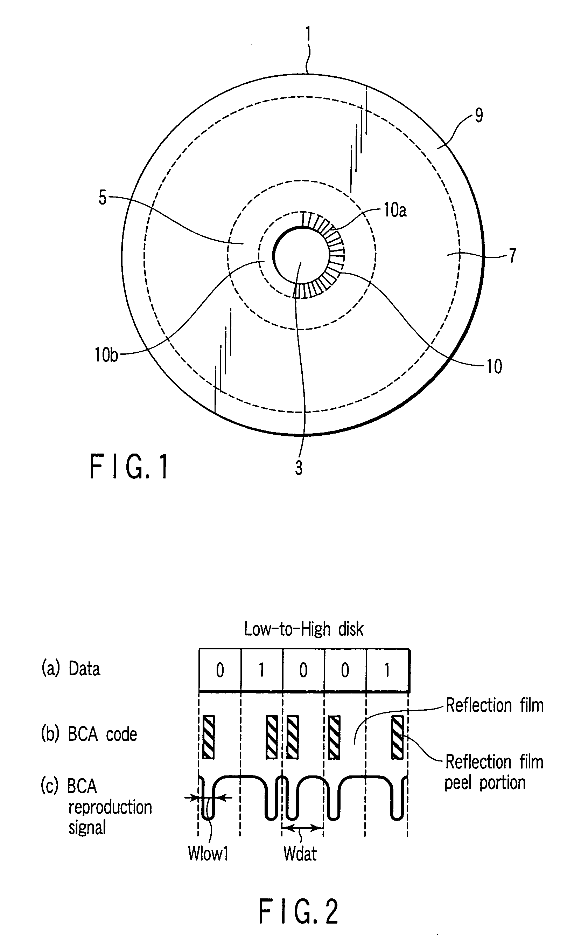

FIG. 1 shows a configuration of an information recording medium according to an embodiment of the invention. An information recording medium (optical disk) 1 of the invention has a clamp hole 3 for clamping in the center of the optical disk 1. An information recording layer of the optical disk 1 is divided into a plurality of zonal areas including a BCA 10, a lead-in area 5, a data area 7, and a lead-out area 9 in order from the inner radius of the optical disk 1. Widths and radius points of the disk of these areas are previously defined by the type of disk. At this point, a recording mark referred to as pre-pit is previously recorded by projections and depressions in a part of the lead-in area 5. Disk management information such as the type of disk and recommended strategy is stored in the pre-pit. Spiral grooves are provided in a part of the lead-in area 5, the data area 7, and the lead-out area 9. Signals including a user's information can be recorded and updated along the groove. Copy protection information specific to the optical disk 1, the type of the disk (boot type), version information (or part version), polarity information on the medium, and the like are stored in the BCA 10. The polarity information on the medium is the information for indicating whether the medium is an L-H medium or an H-L medium. Sometimes the polarity information on the medium is individually stored as the polarity information on the medium, and sometimes the polarity information on the medium is described as one of the types of the disk or the versions.

In either case, the polarity information on the medium is recorded in the BCA 10 provided at the predetermined recording position on the disk radius in the optical disk 1 of the invention, so that the polarity of the medium can rapidly and accurately be determined only by reproducing the BCA 10. (Polarity of Information Recording Medium (Optical Disk))

With reference to the information recording medium used for the information recording, there is a thermo-recording medium as a write-once or rewritable information recording medium. In the thermo-recording medium, information is recorded in a recording layer by using a laser beam to heat and cool the recording layer. A phase change medium can be cited as a typical example of the thermo-recording medium. In the phase change medium, the information is recorded by utilizing a difference in phases of the medium, i. e., a difference in physical properties caused by a difference between an amorphous state and a crystalline state such as a difference in reflectance.

In the optical disk utilizing the phase change medium, generally the whole of a normal signal recording area such as a data area in the medium is previously crystallized by initialization, and an amorphous recording mark is formed by irradiating the signal recording area with the laser beam having high intensity. This is because the medium is melted by the laser beam having the high intensity and then the medium is quenched to be changed into the amorphous state by weakening the irradiation of the laser beam. The intensity of the laser beam is referred to as recording power. The initialization of the medium (crystallization all over the surface) or the erase of the amorphous recording mark is performed by irradiating the amorphous recording mark with the laser beam having relatively lower intensity to maintain the medium at a crystallization temperature for a predetermined time. The relatively lower intensity of the laser beam is referred to as initialization power or erasing power.

In a BCA, generally the initialization is not performed, and a BCA code is recorded by forming the crystalline state with the laser beam having the initialization power in an amorphous state area referred to as "as deposited" where only the information recording medium film is formed.

On the other hand, the reproduction of the information is performed by irradiating the medium with the laser beam having very low intensity at a constant level to invert the change in reflectance between the crystalline portion and the amorphous portion which is of the recording mark into an electrical signal. The very low intensity is referred to as reproduction power. The amount of change in reflectance or phase between the crystalline portion and the amorphous portion can be controlled by the kind and composition of the material used for the information recording layer or a layer structure. A medium whose reflectance after recording the signal is lower than that before recording the signal in the data area is referred to as High-to-Low medium (H-L medium), and a medium whose reflectance after recording the signal is higher than that before recording the signal is referred to as Low-to-high medium (L-H medium). Generally, the medium before the recording is often in the crystalline state and the medium after the recording is often in the amorphous state, so that the reflectance of the amorphous portion is lower than that of the crystalline portion in the H-L medium and the reflectance of the crystalline portion is lower than that of the amorphous portion in the L-H medium. The embodiment is also described by the same definition.

The H-L medium includes all the phase change mediums, such as DVD-RAM and DVD-RW, which are currently commercially available.

### (Physical Shape and Reproduction Signal of BCA Code)

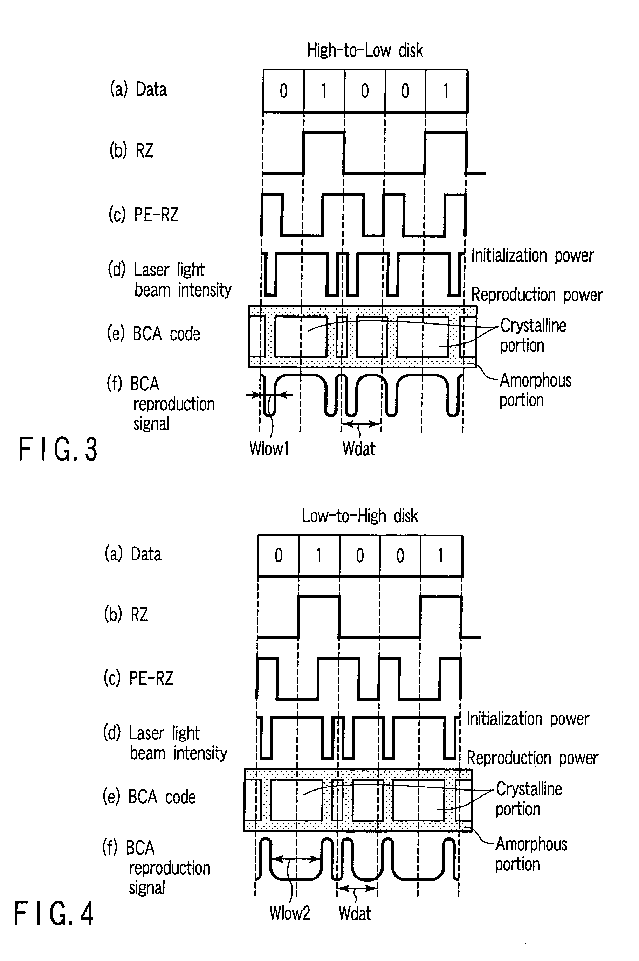

FIG. 2 is a schematic view showing a BCA code recorded in a conventional DVD-ROM disk and a reproduction signal of the BCA code. FIG. 3 is a schematic view showing recording data, a waveform of a laser beam to be recorded, a recorded BCA code, and a reproduction signal of the BCA code, when the phase change type BCA code is recorded in the H-L medium such as a DVD-RAM. FIG. 4 is a schematic view showing the recorded BCA code and the reproduction signal of the BCA code, when the BCA code is recorded in the L-H medium in a manner similar to FIG. 3.

In the recording of the BCA 10, as shown in (b) and (c) of FIG. 3, PE-RZ (Phase Encoding-Return to Zero) conversion is performed to the data to be stored like (a) of FIG. 3. Then, as shown in (d) of FIG. 3, the intensity of the laser beam is modulated on the basis of the PE-RZ converted signal in order to record the BCA code. At this point, in a conventional method, the laser beam is emitted at the reproduction power in the portion corresponding to the Low level of the PE-RZ converted signal and the laser beam is emitted at the initialization power in the portion corresponding to the High level of the PE-RZ converted signal, which allows the BCA code shown by (e) of FIG. 3 to be recorded in the BCA of the optical disk. When the BCA code is reproduced by the optical disk apparatus, the reproduction signal is obtained as shown in (f) of FIG. 3. Similarly to the BCA reproduction signal of the DVD-ROM disk shown in (c) of FIG. 2, in the obtained reproduction signal, since the pulse width Wlow1 of the depression portion is smaller than half the width of one data period Wdat, it is understood that the obtained reproduction signal has compatibility with the signal of the DVD-ROM disk shown in FIG. 2.

FIG. 4 shows a schematic view of the recorded BCA code and its reproduction signal when the BCA code is recorded in the L-H medium in a manner similar to FIG. 3. Similarly to FIGS. 4E and 4F, in the L-H medium, the reproduction signal level of the crystalline portion is lower than that of the amorphous portion (non-crystalline area). This is because the reflectance of the crystalline portion decreases owing to the multiple interference of the layers forming the medium. Despite of the same recording method, when the BCA code is recorded in the L-H medium, as shown in FIG. 4F, the pulse width of the reproduction signal differs from the signals shown in (c) of FIG. 2 and (f) of FIG. 3, and the pulse width Wlow2 of the depression portion is larger than half the width of one data period Wdat. In such reproduction signals, since the polarity of the signal is different, the data cannot be read. In the case of FIG. 4F, an average level of the reproduction signal is too low to perform focus control based on the reproduction signal.

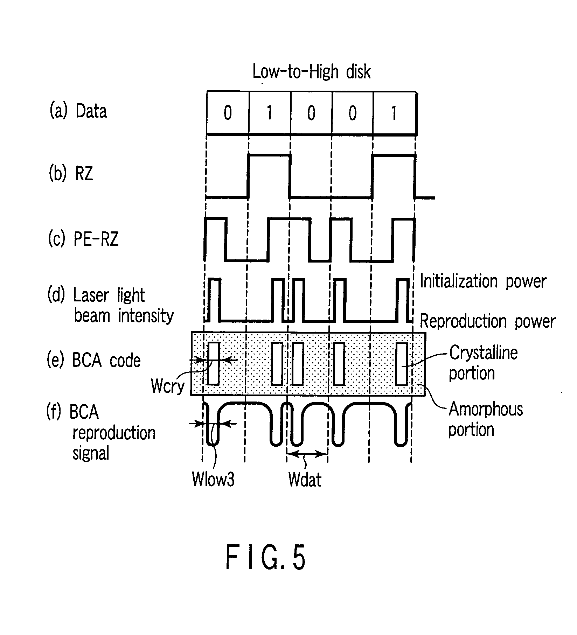

FIG. 5 is a schematic view showing a modulated waveform of the laser beam, the recorded BCA code, and the reproduction signal of the BCA code, when the preferable BCA code is recorded in the L-H medium according to an embodiment of the invention.

When the BCA code is recorded in the L-H medium in the invention, in modulating the laser beam intensity on the basis of the PE-RZ converted signal, as shown in (d) of FIG. 5, the laser beam is emitted at the initialization power to crystallize the recording layer in the portion corresponding to the High level of the PE-RZ converted signal and the laser beam is emitted at the reproduction power to maintain the original amorphous state in the portion corresponding to the Low level of the PE-RZ converted signal. As a result, the BCA code shown in (e) of FIG. 5 is recorded in the optical disk of the invention. In the BCA, the amorphous portion corresponds to the Low level portion of the PE-RZ converted signal and the crystalline portion corresponds to the High level portion. The BCA is characterized in that the width of the crystalline portion is smaller than half a data period Wdat. As shown in (f) of FIG. 5, the reproduction of the BCA code has the same shape as the reproduction signals shown in (c) of FIG. 2 and (f) of FIG. 3. An area 10b in a doughnut-shaped area of the BCA 10 in which a BCA code 10a is not recorded is irradiated with the reproduction power (see FIG. 1). As a result, the area 10b remains as the non-initialized state (amorphous state).

In the optical disk of the invention, even if the optical disk is the L-H medium, the BCA reproduction signal similar to the ROM medium and the H-L medium can be obtained. Namely, the optical disk (L-H medium) of the invention has the compatibility with other mediums such as the ROM medium and the H-L medium, and the information can correctly be read from the optical disk of the invention. Further, in the optical disk (L-H medium) of the invention, the average level of the BCA reproduction signal is equal to that of the H-L medium, so that the focus control can be performed even if the polarity of the medium is not determined.

### (Detail of BCA Code)

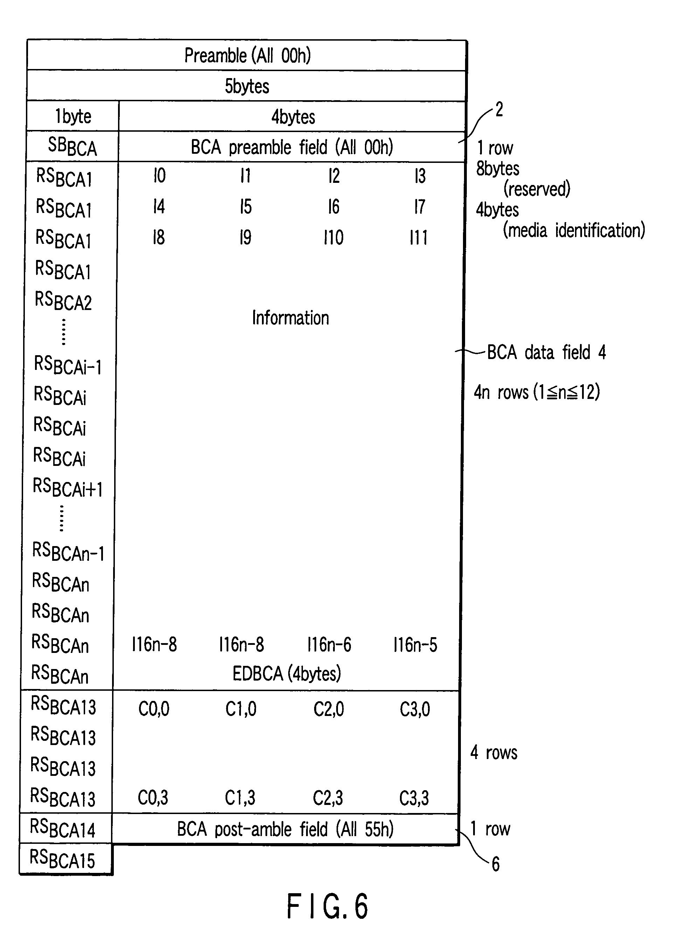

Then, contents of information to be stored in the BCA of the optical disk according to an embodiment of the invention will be described. FIG. 6 shows a structure of the data to be stored in the BCA. The BCA code includes a BCA preamble field 2, a BCA data field 4, and a BCA post-amble field 6. The BCA preamble field 2 is one which indicates start of the BCA code, and the post-amble field 6 is one which indicates end of the BCA code. The copy protection information and the information on the type of the optical disk are stored in the BCA data field 4.

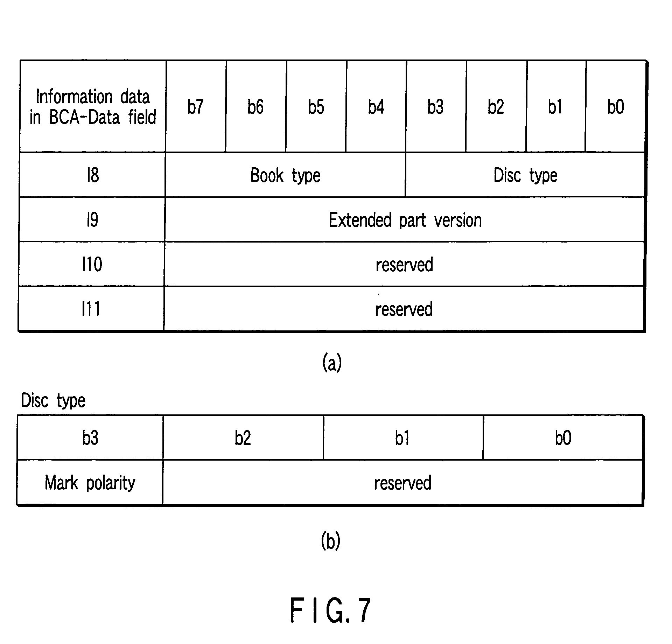

FIG. 7 shows the contents of I8 to I11 of FIG. 6 as a specific example of the data stored in the BCA data field. Each piece of the information is eight-bit data. It is noted that, 10 to 17 are the copy protection information.

As shown in (a) of FIG. 7, a book type of a standard for expressing the kind of the optical disk, a disc type, and an extended part version are recorded in I8 and I9. As shown in (b) of FIG. 7, for example, mark polarity for expressing whether the optical disk is the L-H medium or the H-L medium is stored in the disc type (b0 to b3) of I8. For example, when the optical disk is the read-only disk, "0" is stored in the disc type .

When the optical disk is not the read-only disk but the H-L medium, "0" is stored in b3 of the disc type which is of the mark polarity bit. When the optical disk is the L-H medium, "1" is stored in b3 of the disc type which is of the mark polarity bit. In either case, "0" is stored in b2 to b0.

Therefore, in the optical disk of the invention, whether the optical disk is the H-L medium or the L-H medium can be recognized by reading the BCA code, so that the determination of the type of the optical disk can correctly and rapidly be performed.

### (Optical Disk Apparatus Utilizing BCA)

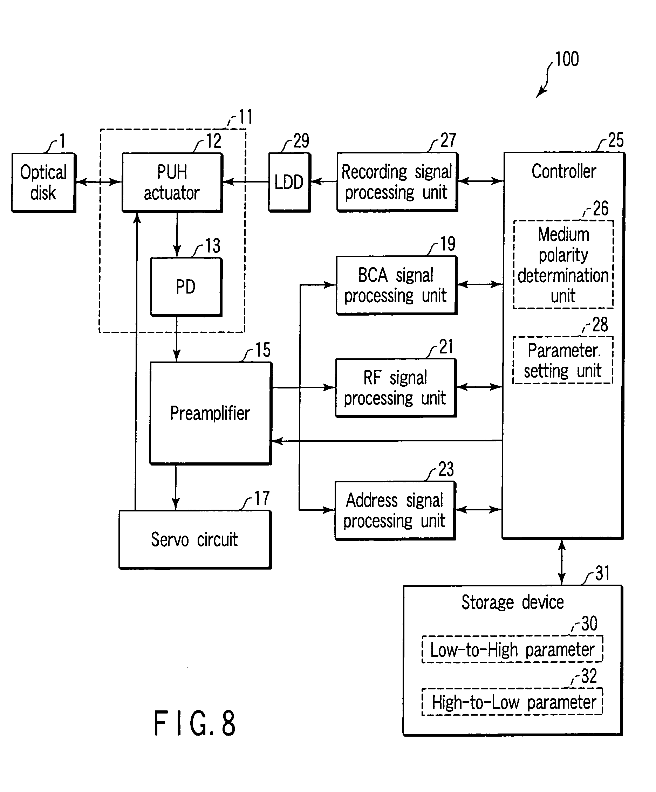

FIG. 8 shows a configuration of an optical disk apparatus according to an embodiment of the invention. In an optical disk apparatus 100 of the invention, information is recorded and reproduced by focusing a laser beam emitted from a pickup head (PUH) 11 onto a information recording layer of an optical disk 1. The light beam reflected from the optical disk 1 passes through an optical system of the PUH 11 again, the light beam is detected by a photodetector (PD) 13, and then a photodetection signal of an electrical signal is output.

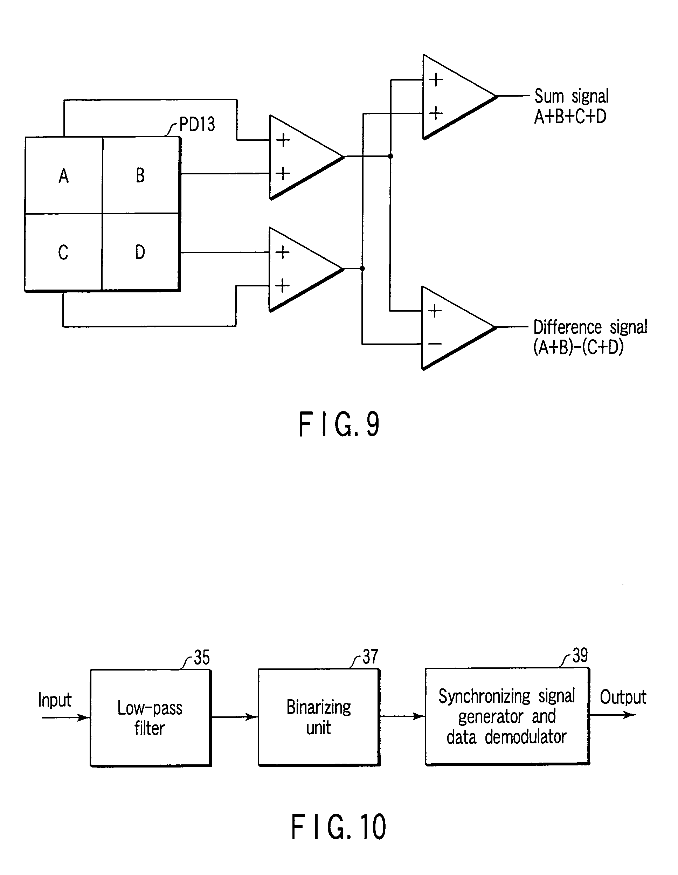

The PD 13 is divided into at least two elements. The signal, in which addition is performed to output signals of individual elements, is referred to as a sum signal. The signal, in which subtraction is performed to output signals of individual elements, is referred to as a difference signal. Particularly the sum signal to which high-frequency information such as user information is added is referred to as the RF signal. The signal in which the output signals of individual elements arranged in a radial direction with respect to the optical disk 1 are subtracted is referred to as radial push-pull signal. FIG. 9 shows an example of a quadrant PD. The signal in which the output signals of all the four elements are added becomes the sum signal. The signal in which, after the output signals of two elements are added, the subtraction between the added signals is performed becomes the difference signal. The difference signal is the radial push-pull signal.

Returning to FIG. 8, the photodetection signal is amplified by a pre-amplifier 15 and output to a servo circuit 17, a BCA signal processing circuit 19, an RF signal processing circuit 21, and an address signal processing circuit 23. At this point, since the optical disk apparatus 100 needs to reproduce various types of the optical disks 1, each circuit has a function of changing a parameter.

The servo circuit 17 generates a focus servo signal, a tracking servo signal, and a tilt servo signal which are output to an actuator 12 of the PUH 11, i.e. a focus actuator, a tracking actuator, and a tilt actuator, respectively.

The RF signal processing circuit 21 reproduces information such as recorded user information by mainly processing the sum signal in the photodetection signals. In this case, the modulation method includes a slice method and a PRML method.

The address signal processing circuit 23 reads physical address information for indicating a recording position on the optical disk 1 by processing the detected signal to output the physical address information to a controller 25. The controller 25 reads the information such as the user's information located at the desired position or records the information such as the user's information in the desired position on the basis of the physical address information. At this point, the user's information is modulated into the signal suitable for the optical disk recording by a recording signal processing circuit 27. For example, a modulation law such as (1, 10)RLL or (2, 10)RLL is applied. The controller 25 includes a medium polarity determination unit 26 and a parameter setting unit 28. The medium polarity determination unit 26 determines whether the optical disk loaded in the optical disk apparatus is an L-H medium or H-L medium. The parameter setting unit 28 sets parameters of various circuits. The controller 25 is connected to a storage device 31, and an L-H medium parameter or an H-L medium parameter is stored in the storage unit 31.

The BCA signal processing circuit 19 reads information such as copy protection information, disk type, version information, and medium polarity information by mainly processing the sum signal in the detected signals.

### (Description of BCA Reproduction Circuit and Utilization Method)

FIG. 10 shows a block diagram of the BCA signal processing circuit 19. The photo-detection signal converted by the PUH 11 is amplified by the preamplifier 13. When the signal enters the BCA signal processing circuit 19, the signal passes first through a band-pass filter or a low-pass filter 35. At this point, signal noise of a high-frequency component and a fluctuation in low frequency are removed. The signal is binarized through a binarizing unit 37, the signal is demodulated through a synchronizing signal generator and data demodulator 39 to become reproduction data expressed by "0" and "1," and then the signal is transmitted to the controller 25. When a second order Bessel filter is used as the low-pass filter 35, the low-pass filter 35 can correctly transmits the information on the BCA code while removing the noise. The BCA signal whose channel bit cycle is 4.63 µsec shall be filtered by a second order low-pass Bessel filter with a cut-off frequency of 550 kHz.

The controller 25 interprets the information such as the standard type, the version information, the copy protection information, and the medium polarity information from the reproduction data. As a result of the interpretation, the controller 25 optimizes the parameter by using the function of changing the parameter of each circuit such as the preamplifier 15, the servo circuit 17, the recording signal processing circuit 27, the address signal processing circuit 23, and the RF signal processing circuit 21.

Particularly, when the disk type is a phase change disk, or when the polarity information indicates the L-H medium, there is a high possibility that the reflectance of the unrecorded portion of the data area 7 or the lead-in area 5 is lower than 15%. Therefore, the switching is performed in accordance with the decrease in reflectance such that the signal is amplified by changing a gain of the preamplifier 15, the gain of each servo circuit is increased, or a threshold of focus pulling determination is lowered. In contrast, when the polarity information indicates the H-L medium, there is the high possibility that the reflectance of the unrecorded portion of the data area 7 or the lead-in area 5 is higher than 15%. Therefore, the switching is performed in accordance with the increase in reflectance such that the signal is suppressed by changing the gain of the preamplifier 15, the gain of each servo circuit is decreased, or the threshold of focus pulling determination is increased. Thus, the controller 25 has the medium polarity determination unit 26 which determines the polarity of the optical disk from the polarity information (I9 of FIG. 7) of the optical disk and the parameter setting unit 28 which optimally adjusts the parameter of each circuit of the optical disk apparatus on the basis of the determination of the medium polarity determination unit 26.

Accordingly, in the optical disk apparatus of the invention, regardless of whether the disk loaded in the apparatus is the H-L medium or the L-H medium, the polarity of the medium can correctly be determined to stably record and reproduce the information.

### (Optical Disk Recording and Reproduction Method Which Utilizes BCA Code)

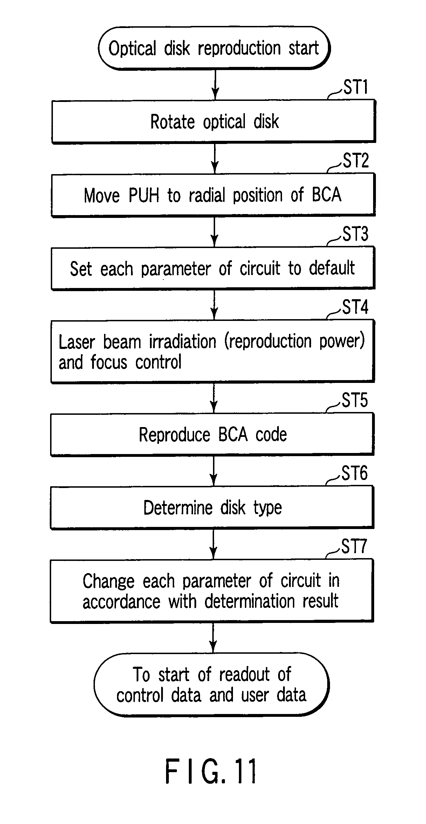

A reproduction start process of the optical disk according to the invention will be described below. The reproduction start process is performed in advance of the readout of control data and/or the readout of user data. FIG. 11 is a flowchart showing the reproduction start process. In Step ST1, rotation of the optical disk is started. The rotating speed of the optical disk is controlled so as to reach a predetermined value in order to reproduce the BCA code. In Step ST2, the PUH 11 is moved to the predetermined radius of the BCA. In Step ST3, the parameter of each circuit such as the servo circuit 17 and the signal processing circuits is set to a default value by the controller 25 of the optical disk apparatus 100. In Step ST4, the laser beam is emitted at the reproduction power to perform the focus control. In Step ST5, the BCA code is reproduced and the stored information is read. The information includes the standard type, the version information, the copy protection information, and the medium polarity information. Although not shown here, means such as retry is performed when the BCA code cannot be reproduced. In Step ST6, on the basis of the read information, it is determined whether the disk is the H-L medium or the L-H medium. In Step ST7, the controller 25 of the optical disk apparatus 100 changes the parameter of each circuit such as the servo circuit 17 and the signal processing circuits to the optimum values on the basis of the determination result of Step ST6. For example, when the polarity information is the L-H medium, there is the high possibility that the reflectance of the unrecorded portion of the data area 7 or the lead-in area 5 is lower than 15%. Therefore, the switching is performed in accordance with the decrease in reflectance such that the signal is amplified by changing the gain of the preamplifier 15, the gain of each servo circuit is increased, or the threshold of the focus pulling determination is lowered. When the optimization is finished, the control data of the lead-in area 5 is reproduced and the user data is recorded and reproduced.

In the embodiment, at first the BCA code is reproduced in starting the reproduction of the optical disk regardless of whether the optical disk is the H-L medium or the L-H medium. This is because the BCA reproduction signal average level of the L-H medium according to the invention is equal to that of the conventional H-L medium. Namely, in accordance with the invention, the focus control and the BCA code reproduction can be performed for the L-H medium, the H-L medium, and the ROM medium by using the values of the default circuit parameters similar to the conventional technology. Therefore, the focus control can be stably performed and the information can rapidly be read.

In the embodiment, the polarity (L-H properties or H-L properties) of the medium is determined from the information read from the BCA code, and the circuit parameters for the lead-in area and the data area is optimized on the basis of the determination result. When the polarity of the medium is changed, the reflectance of the disk and the like are largely changed in the lead-in area and the data area except for the BCA. However, the servo control can stably be performed and the information can correctly be read for any optical disk by performing the optimization.

### (BCA Code Recording Apparatus)

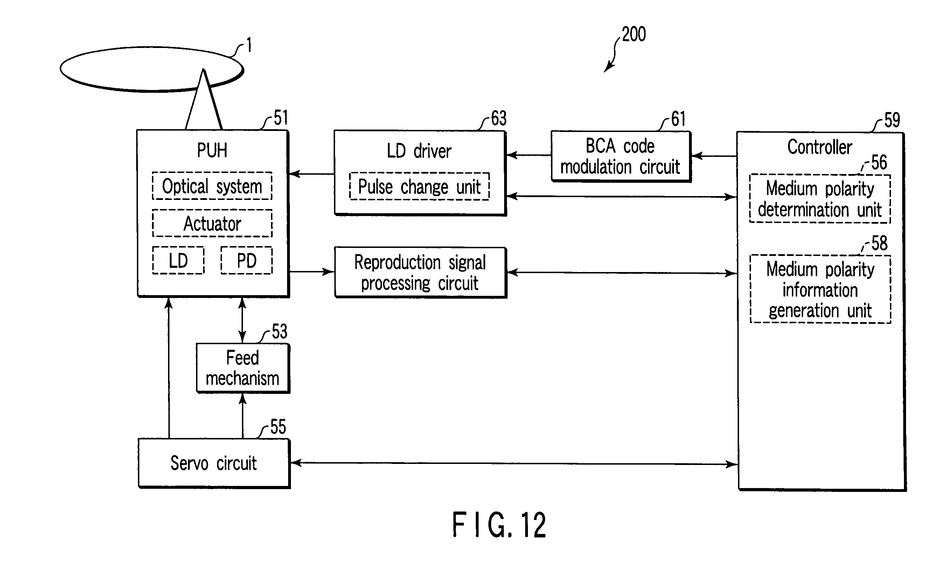

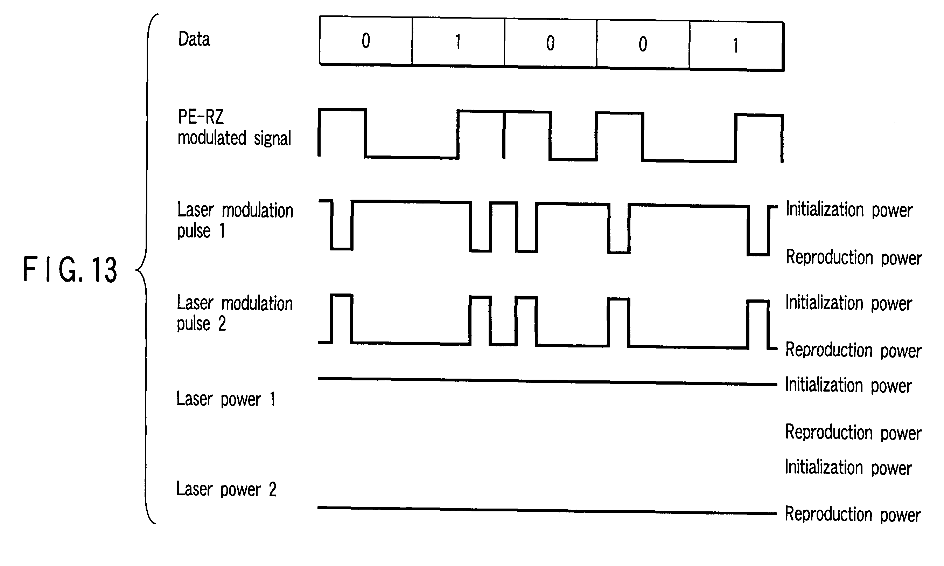

FIG. 12 is a block diagram showing a BCA recording apparatus for recording a BCA code according to the invention, and FIG. 13 shows examples of recording data, a modulated signal, and a recording pulse. The BCA code recording apparatus of the invention is one which is used in manufacturing a disk, for example.

A BCA code recording apparatus 200 includes a PUH 51 which focuses a laser beam onto the optical disk 1, a feed mechanism 53 which moves the PUH 51 to a desired position, and a servo circuit 55 which stably focuses the laser beam onto the optical disk and scans the laser beam.

The BCA code recording apparatus 200 includes a controller 59, a BCA code modulation circuit 61, and an LD driver 63. The controller 59 has a medium polarity determination unit 56 and a medium polarity information generation unit 58. The controller 59 determines whether the disk loaded into the BCA code recording apparatus 200 is the H-L medium or the L-H medium in accordance with the reproduction signal information from the reproduction signal processing circuit 57 or a direction of the user, and then the controller 59 inserts the medium polarity information which is of the determination result into the data recorded as the BCA code.

A change signal is transmitted to each of the units such as a pulse change unit 64 of the LD driver 63 in accordance with the determination. The BCA code modulation circuit 61 converts the data input from the controller 59 into the PE-RZ modulated signal as shown in FIG. 13. In accordance with the direction from the controller 59, the LD driver 63 causes the laser to be emitted based on the PE-RZ modulated signal. When the controller 59 determines that the optical disk is the H-L medium, the BCA code is recorded by using a laser modulation pulse 1. When the controller 59 determines that the optical disk is the L-H medium, the BCA code is recorded by using a laser modulation pulse 2.

For the portion 10b in the doughnut-shaped area of the BCA 10 in which the BCA code 10a is not recorded (see FIG. 1), when the controller 59 determines that the disk is the H-L medium, the optical disk is scanned by using the laser pulse 1 (initialization power). When the controller 59 determines that the disk is the L-H medium, the portion 10b is scanned by using the laser pulse 2 (reproduction power).

In the areas except the BCA area, both the H-L medium and the L-H medium are scanned with a laser modulation pulse 3 to initialize the medium.

### (BCA Code Recording Procedure)

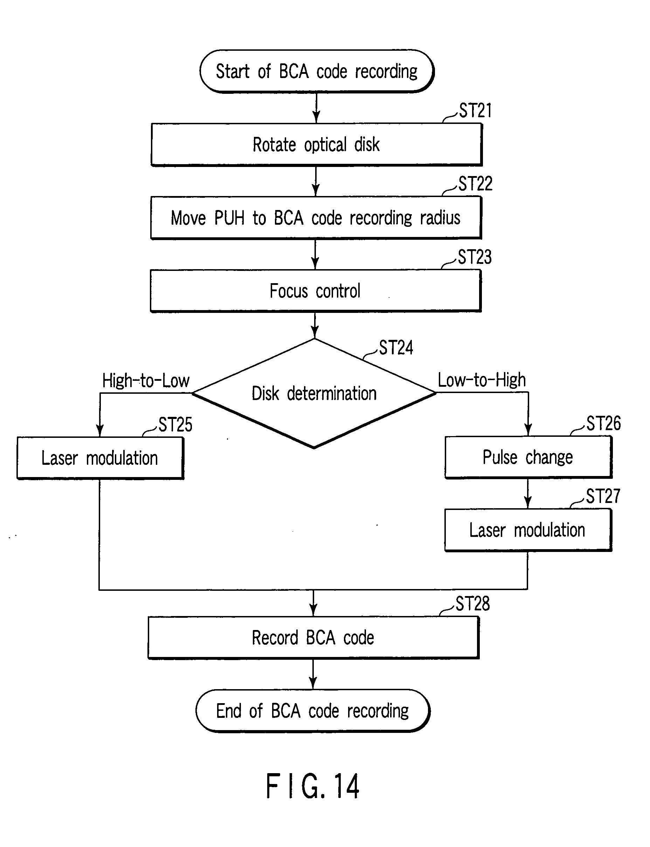

FIG. 14 is a flowchart showing BCA code recording of the invention. When the optical disk 1 is loaded into the BCA code recording apparatus 200 in which the BCA code is recorded, the rotation of the optical disk is started in Step ST21. The rotating speed of the optical disk 1 is controlled so as to reach a predetermined value in order to record the BCA code. In Step ST22, The feed mechanism 53 moves the PUH 11 to a BCA recording position. In Step ST23, the laser beam is focused onto the optical disk 1 by performing the focus control.

In Step ST24, the determination of the optical disk is performed based on the reproduction signal corresponding to a quantity of the light reflected from the optical disk 1. At this point, when the H-L medium is in the "as deposited" state after the film deposition, the reflectance is as low as several percent. In contrast, when the L-H medium is in the "as deposited" state, the reflectance is as high as more than 10%. In accordance with the properties, it is determined that the optical disk is the H-L medium when an amplitude level of the reproduction signal corresponding to the quantity of the light reflected from the optical disk is lower than a predetermined value, and it is determines that the optical disk is the L-H medium when the amplitude level of the reproduction signal is higher than the predetermined value.

Then, the laser output is modulated in order to record the BCA code. In Step ST25, the optical disk in which it is determined that the optical disk is an H-L medium is modulated with the normal laser modulation pulse 1. In Steps ST26 and ST27, for the optical disk in which it is determined that the optical disk is an L-H medium ?, the pulse is changed to perform the modulation with the laser modulation pulse 2. The BCA code is recorded in Step ST28, and then the recording of the predetermined BCA code is ended.

As described above, those skilled in the art can realize the invention through various embodiments, and those skilled in the art can easily make various changes and modifications to these embodiments. Further, it should be understood that the invention can be applied to various embodiments with no need of inventive ability. Therefore, the invention covers a wide scope consistent with the disclosed principles and novel features and the invention is not limited to the embodiments described above.

## Claims

1. An optical disk having a burst cutting area (BCA) (10) formed by a crystalline portion and an amorphous portion, the reflectance of the crystalline portion being lower than the reflectance of the amorphous portion, **characterized in that** a width of each crystalline portion in the BCA is smaller than a half width of one data period.

2. An optical disk in which a BCA formed by a crystalline portion and an amorphous portion is arranged, the BCA area **characterized by** comprising:
a BCA preamble area (2) which indicates start of a BCA code;
a BCA data area (4) which is located subsequent to the BCA preamble area, and in which disk specific information including polarity information is recorded, the polarity information is one of information indicating that the reflectance of the crystalline portions is lower than the reflectance of the amorphous portions and information indicating that the reflectance of the crystalline portions is higher than the reflectance of the amorphous portions; and
a BCA post-amble area (6) which is located subsequent to the BCA data area, the BCA post-amble area indicating end of the BCA code.

3. An optical disk apparatus **characterized by** comprising:
a reading unit (11) which reads data recorded in a BCA formed inside a lead-in area of an optical disk and including disk specific information;
a BCA signal processing circuit (19) which extracts polarity information of the disk from the disk specific information read by the reading unit;
a polarity determining unit (26) which determines polarity of the disk on the basis of the polarity information extracted by the BCA signal processing circuit; and
a parameter setting unit (28) which changes a parameter of the BCA signal processing circuit to an optimum value on the basis of the optical disk polarity determined by the polarity determining unit.

4. An optical disk apparatus according to claim 3, **characterized in that** the parameter setting unit (28) controls a threshold of focus pulling determination while controlling a gain of the BCA signal processing circuit.

5. An optical disk apparatus according to claim 3, **characterized in that** the information in the BCA is recorded by crystalline portions and amorphous portions, and the polarity information is one of information indicating that the reflectance of the crystalline portions is lower than the reflectance of the amorphous portions and information indicating that the reflectance of the crystalline portions is higher than the reflectance of the amorphous portions.

6. A method for reproducing information read from an optical disk through a signal processing circuit and recording the information in the optical disk through the signal processing circuit, the method **characterized by** comprising:
reading data recorded in a BCA (10) formed on the optical disk and including disk specific information (ST5);
extracting polarity information of the disk from the read disk specific information;
determining polarity of the disk on the basis of the extracted polarity information (ST6); and
changing a parameter of the signal processing circuit to an optimum value on the basis of the determined polarity of the disk (ST7).

7. A method according to claim 6, **characterized in that**, in the changing the parameter (ST7), a threshold of focus pulling determination is controlled while a gain of the signal processing circuit is controlled.

8. A method according to claim 6, **characterized in that** the information in the BCA is recorded by crystalline portions and amorphous portions, and the polarity information is one of information indicating that the reflectance of the crystalline portions is lower than the reflectance of the amorphous portions and information indicating that the reflectance of the crystalline portions is higher than the reflectance of the amorphous portions.

9. A BCA code recording apparatus for recording disk specific information in a BCA formed on an optical disk, the apparatus **characterized by** comprising:
an optical head (51) which irradiates the BCA of the optical disk with laser beam to provide a reproduction signal corresponding to a quantity of reflected light;
a polarity determination unit (56) which determines polarity of the disk on the basis of an amplitude of the reproduction signal;
a polarity information generation unit (58) which generates polarity information for indication the polarity of the disk determined by the polarity determination unit; and
a laser modulation unit (61) which modulates a laser beam emitted from the optical head in order to record the polarity information generated by the polarity information generation unit in the BCA.

10. A BCA code recording apparatus according to claim 9, **characterized in that**, when an amplitude level of the reproduction signal from the BCA is lower than a predetermined value, the polarity determination unit (56) determines that, in a crystalline portion and an amorphous portion which are formed in the BCA, the optical disk is the disk in which the reflectance of the crystalline portion is higher than the reflectance of the amorphous portion, and when the amplitude level is higher than the predetermined value, the polarity determination unit determines that the optical disk is the disk in which the reflectance of the crystalline portion is lower than the reflectance of the amorphous portion.

11. A BCA code recording apparatus according to claim 9, **characterized in that** the laser modulation unit (61) changes laser modulation pulses different from each other on the basis of the polarity information of the disk.

12. A BCA code recording method for recording disk specific information in a BCA formed on an optical disk, the method **characterized by** comprising:
irradiating the BCA of the optical disk with a laser beam (ST51);
determining polarity of the disk on the basis of a reproduction signal corresponding to a quantity of light reflected from the BCA (ST24);
generating polarity information for indicating the determined polarity of the disk (ST58); and
modulating the laser beam in order to record the generated polarity information in the BCA.

13. A BCA code recording method according to claim 12, **characterized in that**, in the step of determining the polarity, when an amplitude level of the reproduction signal from the BCA is lower than a predetermined value, it is determined that, in a crystalline portion and an amorphous portion which are formed in the BCA, the optical disk is the disk in which the reflectance of the crystalline portion is higher than the reflectance of the amorphous portion, and when the amplitude level is not lower than the predetermined value, it is determined that the optical disk is the disk in which the reflectance of the crystalline portion is lower than the reflectance of the amorphous portion.

14. A BCA code recording method according to claim 12, **characterized in that**, in the step of modulating the laser beam, laser modulation pulses different from each other are changed on the basis of the polarity information of the disk.
